# EUROPEAN PATENT SPECIFICATION

(11) **EP 3 887 718 B1**
(45) Date of publication and mention of the grant of the patent: **23.11.2022**
(21) Application number: 19790287.7
(22) Date of filing: 04.10.2019
(51) Int. Cl.: F21V 11/06, F21V 31/00, F21V 5/00, F21V 29/76, F21V 29/89, F21Y 105/10, F21Y 115/10

(54) **AN LED LIGHTING DEVICE FOR A CULTIVATED SURFACE**
LED-BELEUCHTUNGSVORRICHTUNG FÜR EINE KULTIVIERTE OBERFLÄCHE
DISPOSITIF D'ÉCLAIRAGE À DEL POUR UNE SURFACE CULTIVÉE

(30) Priority: 27.11.2018 IT 201800010622
(43) Date of publication of application: 06.10.2021
(73) Proprietor: Lux Ledlighting S.r.l., 25081 Bedizzole, Brescia (IT)
(72) Inventor: ALBERTI, Cesare, 25081 Bedizzole, Brescia (IT)
(74) Representative: Pulieri, Gianluca Antonio
(86) International application number: PCT/IB2019/058470
(87) International publication number: WO 2020/109882

(56) References cited:
- US-A1- 2012 087 118
- US-A1- 2013 021 797
- US-A1- 2013 147 347

## Description

The subject-matter of the present invention is an LED lighting device intended to irradiate a cultivated surface, for example provided with seeds or plants, to cause, stimulate or accelerate the growth, inflorescence and fructification thereof.

The expedient of illuminating a cultivated surface to accelerate the growth of the cultivation has been well known for a long time and at present is used particularly in various sectors, from cultivating flowers, fruits and vegetables in greenhouses to growing grass on playgrounds.

For some years now, in the field of lighting devices, one has witnessed the replacement of traditional fluorescent, halogen and high-pressure sodium lights with LED lights, which provide a clear energy savings for the same lighting and a much longer average life. Examples of such devices can be found in documents US 2013/147347 A1, US 2013/021797 A1 and US 2012/097118 A1.

However, in the field of lighting devices for the irradiation of cultivated surfaces, the advent of LED lights, if on the one hand has improved the transfer of radiant energy, reducing consumption, on the other has significantly reduced the transfer of thermal energy from the light source to the cultivated surface, due to the nature of LED light, which is low in infrared, and the cooling modes typical of LED lighting devices.

The object of the present invention is to obtain an LED lighting device for cultivated surfaces that overcomes the drawbacks mentioned above.

This object is achieved by an LED lighting device obtained according to claim 1. The dependent claims describe further advantageous embodiments.

The features and advantages of the LED lighting device according to the present invention will be apparent from the description given hereinafter, provided by way of non-limiting example, in accordance with the accompanying figures, wherein:
- Figure 1 shows a lighting device according to an embodiment of the present invention;
- Figure 2 shows a lighting group of the lighting device;
- Figure 3 illustrates an LED board of the lighting device;
- Figures 4 and 5 show, respectively, a main support for the lighting device from the side of the upper face and an enlargement thereof;
- Figure 6 shows the main support, from the side of the lower face;

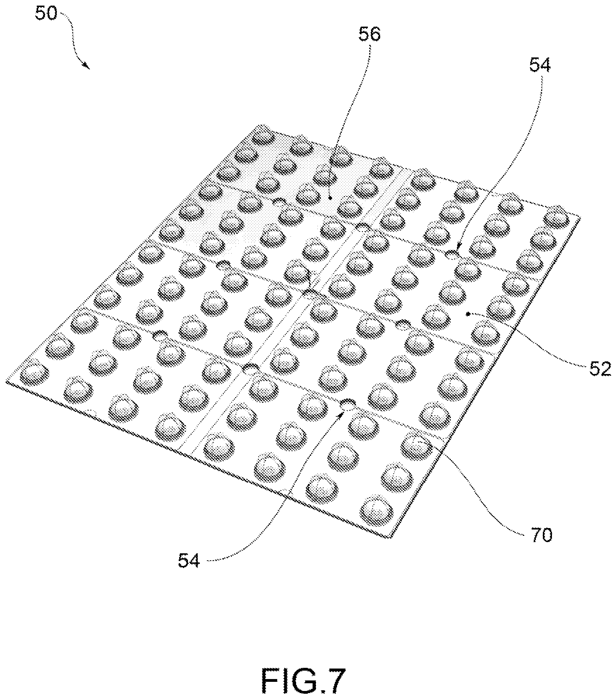

- Figure 7 illustrates a functional group of the lighting device;
- Figure 8 shows a functional group portion of the lighting device;
- Figure 9 shows an assembly comprising the main support and the functional group, from the side of the upper face;

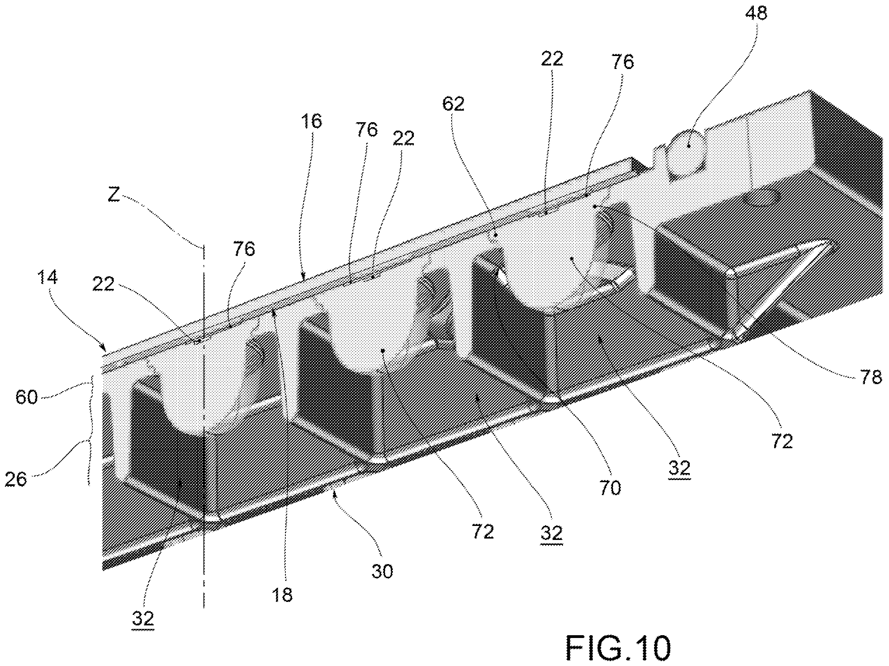

- Figure 10 illustrates a cross-sectional view of the lighting group in Figure 2;

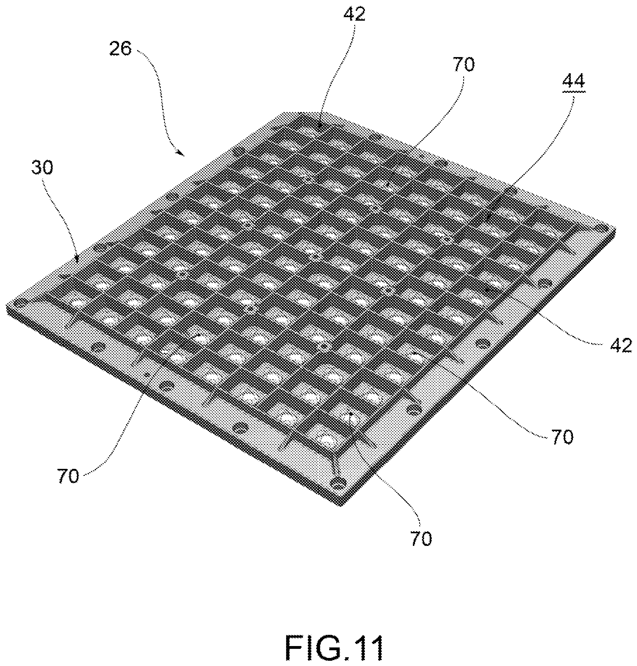

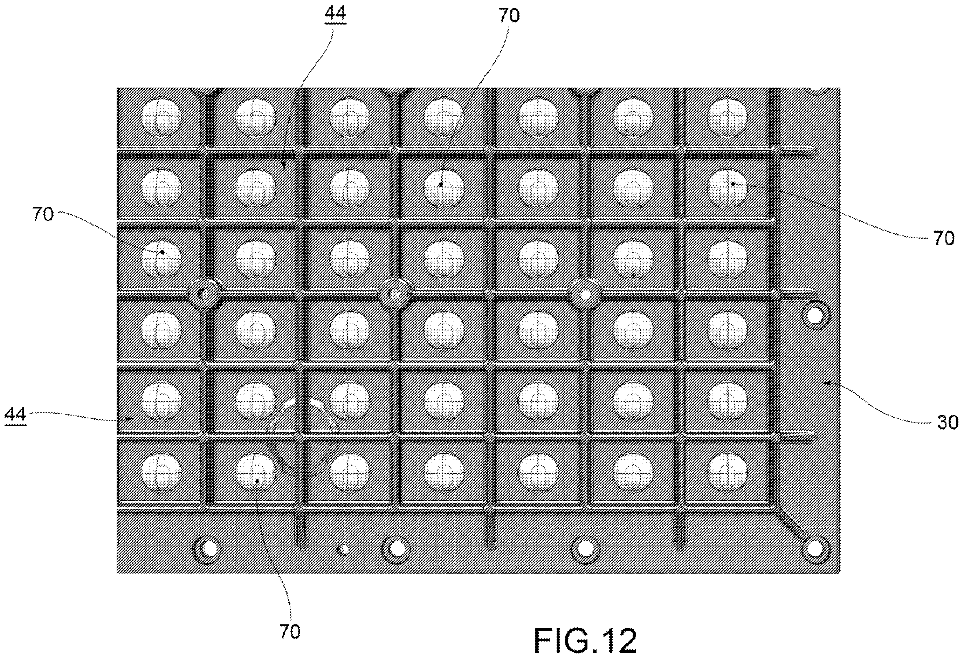

- Figures 11 and 12 show respectively the main support-functional group assembly from the side of the lower face and an enlargement thereof.

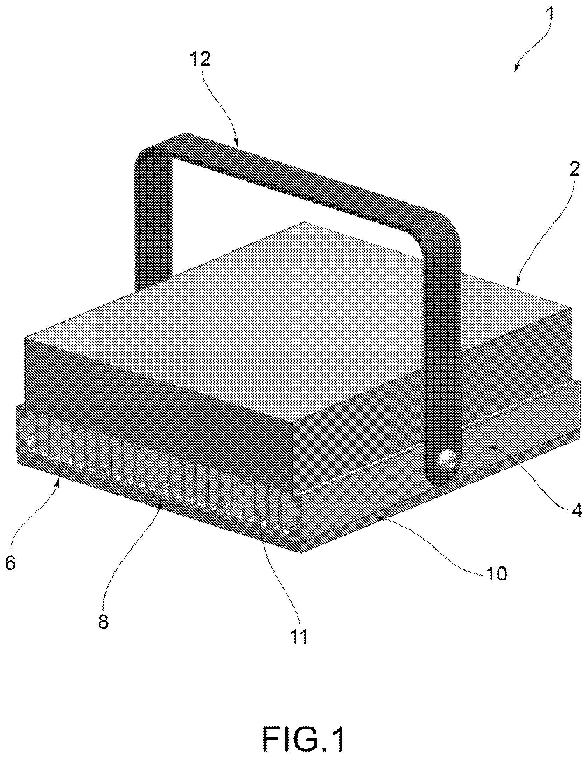

With reference to the accompanying figures, an LED lighting device for cultivated surfaces has been indicated collectively at 1, comprising a control box 2, within which there are electrical components for the power supply and control of the LEDs, a heat sink 4 and a lighting group 6 (Figure 1).

The lighting group 6 has a plate-shaped configuration and has a lower face 8 for light irradiation and an upper face 10, against which the heat sink 4 is placed.

For example, the heat sink 4 is made of aluminum and, on the side opposite to the one facing the lighting group 6, provides for a plurality of spaced slats 11.

The control box 2 is located over the heat sink 4, for example in contact with the slats 11.

Preferably, the lighting device 1 comprises a bracket 12, usually hinged to the heat sink 4.

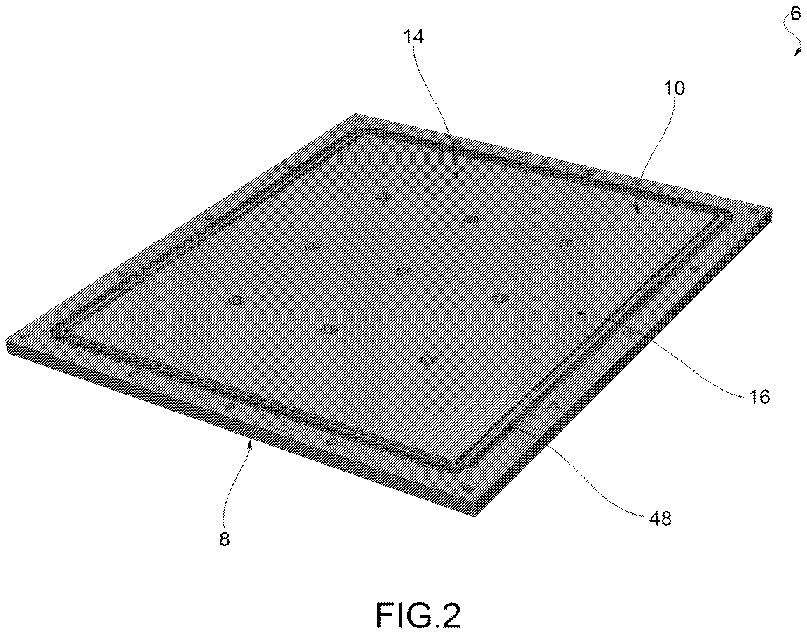

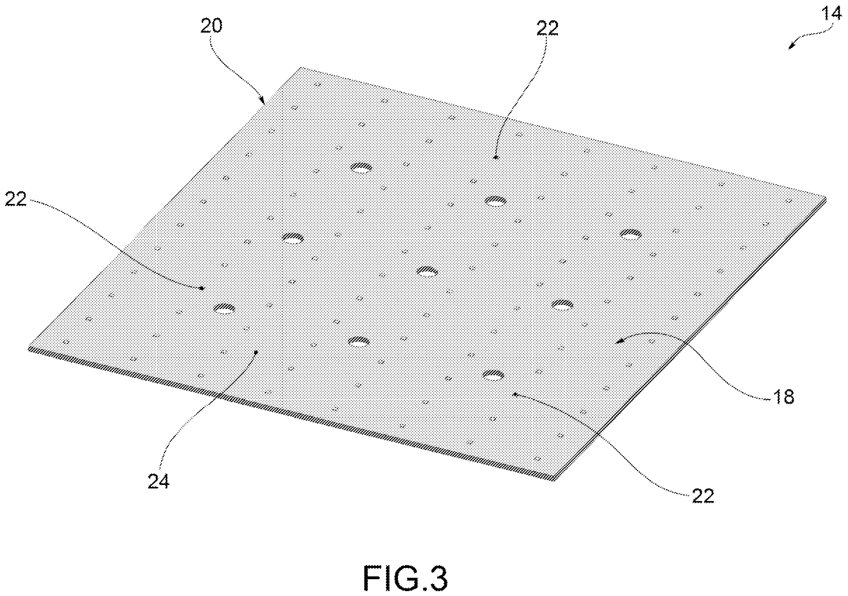

The lighting group 6 comprises an LED board 14 with a substantially smooth upper surface 16 and a lower surface 18 on which is housed an LED matrix 20 consisting of a plurality of LEDs 22, preferably arranged in rows and columns, and a printed circuit board 24 to attach the LEDs 22 and distribute the supply current (Figures 2 and 3) .

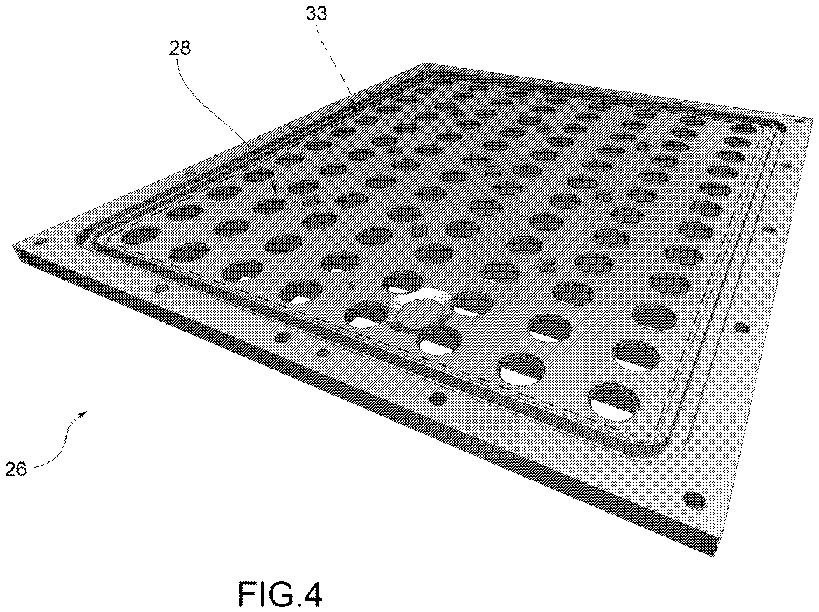

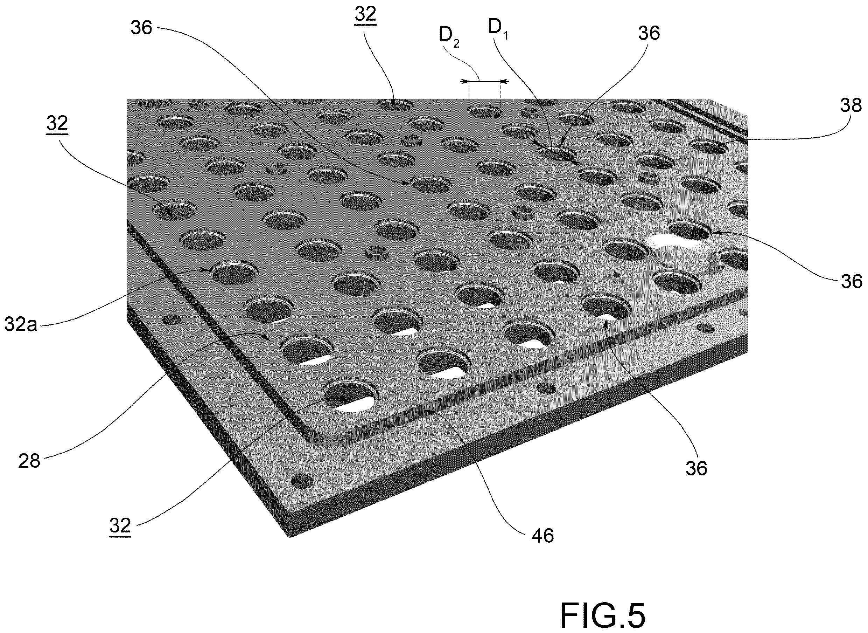

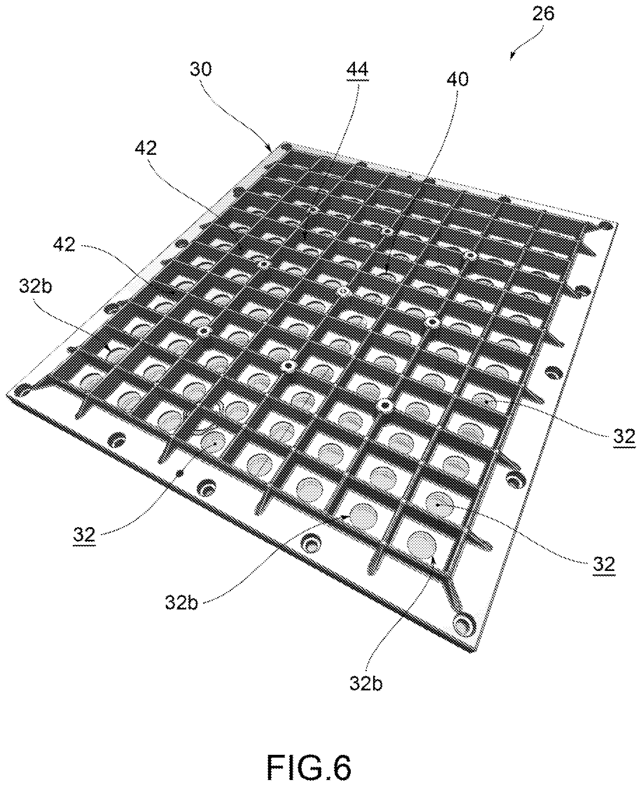

The lighting group 6 further comprises a main support 26 (Figures 4 to 6), preferably consisting of a plate-shaped body made in a single piece of metal material, preferably aluminum, suitably shaped on both sides.

In particular, the support 26 has an upper face 28 and a lower face 30, corresponding to the lower face 8 of the lighting group 6.

The support 26 has a plurality of holes 32, preferably circular, passing from the upper face 28, wherein there is a respective inlet opening 32a, to the lower face 30, where there is a respective outlet opening 32b, through the thickness of the support 26.

The inlet openings 32a of the holes 32 together occupy, on the upper face 28 of the support 26, a hole region 33.

Said holes 32 are arranged in such a way that, when the LED board 14 is mounted to the upper face 28 of the support 26, each LED 22 is aligned with a respective hole 32, i.e., each LED faces the inlet opening 32a of the respective hole 32.

Said inlet opening 32a, flush with the upper face 28, has a first predefined characteristic dimension D1, for example the diameter in the case of a circular hole, and, lowered relative to the inlet opening 32a, a secondary opening 36 having a second predefined characteristic dimension D2.

The secondary opening 36 forms a narrowing of the hole 32; the first characteristic dimension D1 is therefore larger than the second characteristic dimension D2 (D1>D2).

Between the two openings 32a, 36 there is thus a step that defines a hole seal seat 38, which will be discussed hereinafter.

In addition, preferably, the support 26 comprises a support seal seat 46 extending peripherally on the upper face 28, surrounding the hole region 33 of the upper face 28.

Said support seal seat 46 is preferably milled so as to be lower relative to the upper face 28 and extends continuously along the periphery of the support.

The support seal seat 46 is intended to accommodate a support seal 48 of the lighting group 6, formed by an annular gasket (Figure 2).

Once the LED board 14 is mounted to the support 26, the support seal seat 46, and obviously the support seal 48, surround said LED board 14.

On the lower face 30, the support 26 preferably has a grid structure 40, comprising a plurality of septa 42, for example with prevalent transverse and longitudinal extension, which intersect to form a plurality of niches 44. Within each niche 44 opens a respective hole 32.

The lighting group 6 further comprises a functional group 50 comprising a preferably flexible membrane 52 made, for example, of an elastomeric material, such as a silicone, with good thermal conductivity.

The membrane 52 is thin, i.e., having a thickness of 1.5 millimeters or less, preferably less than 1 millimeter, and even more preferably less than or equal to 0.6 millimeters.

The membrane 52 is geometrically configured to completely cover the region of the support 26 provided with the holes 32 (with the exception, for example, of some localized passages 54 for the mechanical connection between the support 26 and the heat sink 4).

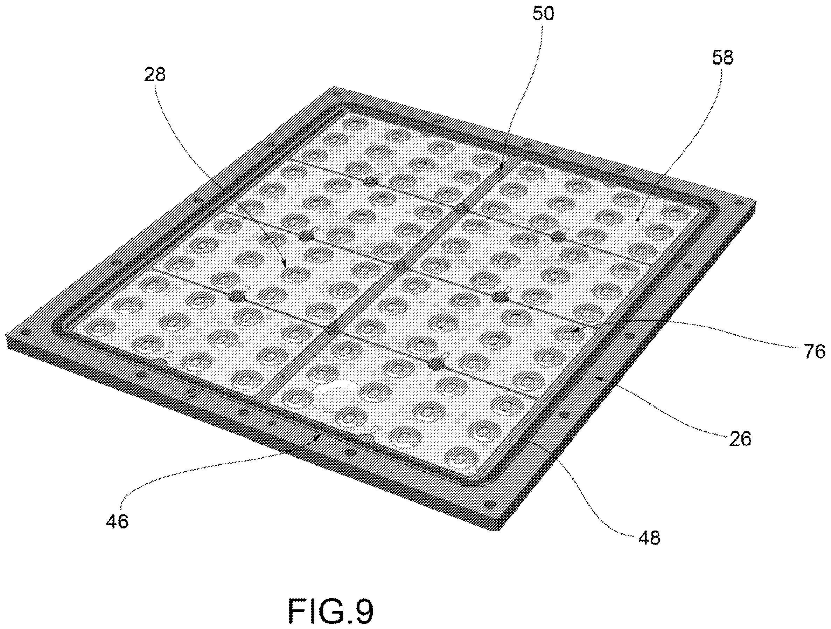

Once the lighting group 6 has been assembled, the membrane 52 is arranged in contact with the upper face 28 of the support 26 and covers the entire region thereof provided with the holes 32 (Figure 9).

The LED board 14 is then arranged above the membrane 52 in contact with the same membrane.

In other words, the lighting group 6 has a sandwich structure, wherein the membrane 52 is arranged between the upper face 28 of the support 26, in contact therewith, and the lower surface 18 of the LED board 14, in contact therewith.

Ultimately, the membrane 52 has a lower face 56, which is in contact with the upper face 28 of the support 26, and an upper face 58, which is in contact with the lower surface 18 of the LED board 14.

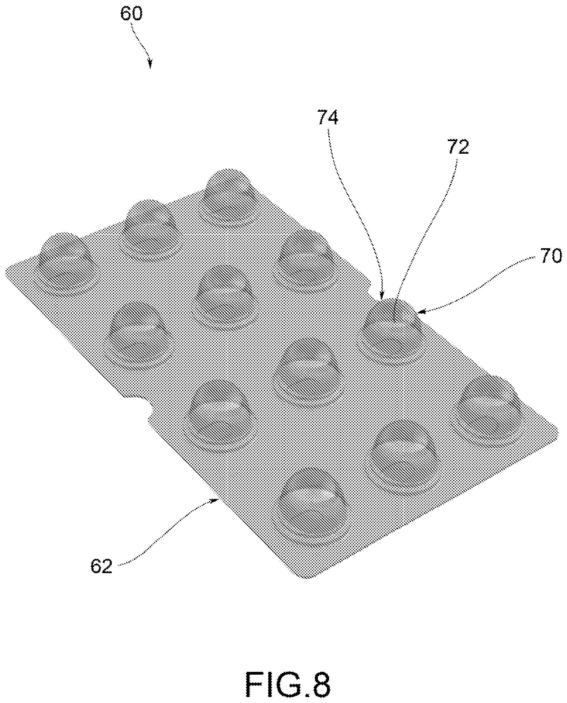

According to a preferred embodiment, the membrane 52 consists of a plurality of membrane portions 62, each of which has, for example, a rectangular shape, structurally separated from each other, which, when placed side by side, comprise the membrane 52 (Figure 8).

The membrane 52 or membrane portions 62, resting on the upper face 28 of the support 26 and on which the LED board 14 rests, are mechanically detached from the upper face 28 and from the LED board; in other words, they are not fixed thereto, for example by rivets or adhesive, as is the case with certain LED lighting devices of the prior art.

Advantageously, this allows one to disregard the thermal expansion of the support or LED board, which is different from that of the membrane.

The lighting group 6 further comprises a plurality of optical elements 70 having optical properties so as to concentrate or distribute the light beam emitted by an LED, as required. Said optical elements 70 are suitable to be mounted to the support 26.

Each optical element 70 preferably consists of a solid optical body 72 having an outer surface 74, in the form of a dome, made of material transparent to the light emitted by the LEDs 22, preferably made of an elastomeric material, for example silicone; said optical body 72 is suitable to be housed in a respective hole 32, so that the convex outer surface 74, arranged inside the respective hole 32, is turned toward the lower face 30 of the support 26.

According to an embodiment, the optical body 72 has an axial symmetrical configuration relative to a main axis Z, and the outer surface 74 derives from the complete rotation around the main axis Z of a parabolic curve.

According to other variants, the optical body has a different shape, in order to convey the luminous flux where necessary, also as a function of the distance and width of the surface to be irradiated.

Preferably, moreover, the membrane 62 has a plurality of pockets 76 obtained on the upper face 58, lowered with respect thereto, each pocket 76 corresponding to a respective optical body 72 and arranged so as to be aligned with the main axis Z of said optical body 72. In other words, the main axis Z of each optical body 72 intersects a respective pocket 76.

Preferably, each pocket 76 has a depth equal to the thickness of the membrane 52.

When the LED board 14 is mounted over the membrane 52, each LED 22 is aligned with a respective pocket 76, i.e., the irradiation cone of said LED 22 enters the respective pocket 76, so that it is intercepted by the respective optical body 72.

Furthermore, according to a preferred embodiment, each optical element 70 comprises a hole seal 78 consisting of an annular element suitable to be housed in the hole seal seat 38 of the support 26.

Preferably, the hole seal 78 is made of an elastomeric material, preferably silicone.

Preferably, moreover, the hole seal 78 is made in one piece with the optical body 72.

According to a preferred embodiment, moreover, the membrane 52 and the optical elements 70 are made in one piece, for example by means of injection molding, of an elastomeric material, for example silicone.

In this embodiment, the functional group 50 is thus made up of a single piece, formed by the membrane 52 and by the plurality of optical elements 70 protruding from the lower face 56 of the membrane 52, organized according to a matrix the positions of which correspond to those of the holes 32 of the support 26, so that each optical element 70 may be inserted into the respective hole 32.

Preferably, said functional group 50 consists of a plurality of structurally separate functional group portions 60, each in a single piece consisting of a membrane portion 62 and a predefined number of optical elements 70. By combining the membrane portions 62, the functional group 50 is obtained.

Innovatively, the LED lighting device described above meets the needs of the industry with regard to the supply of thermal energy to the cultivated surface, as the heat developed by the LED board finds a preferred transmission pathway to the support 26 via the membrane 62.

Advantageously, in effect, the membrane has a good thermal conductivity, due to the polymeric material and to the dimensional characteristics, so as to transfer the heat from the LED board to the support. The support, moreover, is made of material with high thermal conductivity, so as to transfer the heat to the outside.

In other words, the amount of thermal energy that is transferred from the LEDs to the outside environment by the front support, and therefore in the direction of the cultivated surface, is considerable if not greater than that which is transferred to the outside by the heat sink and by the other components.

Advantageously, moreover, the seal created by the support seal and the hole seal allows the device described above to be used in a very humid environment or in contact with water, as is the environment of greenhouses or nurseries.

According to a further advantageous aspect, the lack of mechanical bonds between the membrane or the membrane portions and the support, or between the membrane or the membrane portions and the LED board, makes it possible to disregard the effect of the thermal expansion of the support and the LED board, which is different from that of the membrane (which in some LED lighting devices of the prior art is instead a cause of rupture of the support structure of the optical means).

It is clear that one skilled in the art, in order to meet contingent needs, may make changes to the LED lighting device described above, all contained within the scope of protection as defined by the following claims.

## Claims

1. An LED lighting device (1) for the irradiation of a cultivated surface comprising:
- a support (26) made of thermally conductive material, having a lower face (30), intended to be turned toward the cultivated surface, and an opposite upper face (28), provided with a plurality of holes (32) passing from the upper face (28) to the lower face (30), wherein inlet openings (32a) of said holes (32) on the upper face (28) collectively occupy a hole region (33) of said upper face (28);
- a plurality of optical bodies (72) suitable to concentrate or distribute a light emission cone, each optical body (72) being inserted in a respective hole (32) so as to concentrate or distribute the emission cone exiting the lower face (30);
- a thin and flexible membrane (52), in contact with the upper face (28) of the support (26);
- an LED board (14) comprising a plurality of LEDs (22), superimposed on and in contact with the membrane (52), configured so that each LED (22) is turned toward the membrane (52) and aligns with the respective optical body (72) **characterized in that** the membrane (52)covers said hole region (33) of said upper face (28) of said support (26)

2. A lighting device (1) according to claim 1, wherein the membrane (52) has a thickness of less than 1.5 millimeters, preferably less than 1 millimeter, even more preferably equal to or less than 0.6 millimeters.

3. A lighting device (1) according to any one of the preceding claims, wherein each optical body (72) is a solid body made of an elastomeric material, e.g. silicone rubber.

4. A lighting device (1) according to any one of the preceding claims, wherein each optical body (72) has an outer surface (74) in the form of a dome for the escape of the irradiation cone.

5. A lighting device (1) according to any one of the preceding claims, wherein the membrane (52) and the optical body (72) are made as a single piece wherein the optical bodies (72) protrude from a lower face (56) of the membrane (52), and an upper face (58) of the membrane (52) is turned toward the LEDs (22).

6. A lighting device (1) according to any one of the preceding claims, comprising a plurality of hole seals (78), each hole seal (78) being associated with a respective optical body (72), said hole seal (78) being suitable to form a seal between the lower face (30) and the upper face (28) of the support (26).

7. A lighting device (1) according to claim 6, wherein each hole (32) at the inlet opening (32a) has a hole seal seat (38) wherein a respective hole seal (78) is housed.

8. A lighting device (1) according to claim 6 or 7 when dependent on claim 5, wherein the hole seals (78) are made in one piece with the membrane (52) and the optical bodies (72) .

9. A lighting device (1) according to any one of the preceding claims, wherein the membrane (52) is mechanically detached from the support (26) and/or from the LED board (14).

10. A lighting device (1) according to any one of the preceding claims, wherein the membrane (52) consists of a plurality of structurally separate membrane portions (62), which, side-by-side, form said membrane (52).

11. A lighting device (1) according to claim 10, wherein each membrane portion (62) is associated with a predefined number of optical bodies (72) and said optical bodies (72) are made in one piece with said membrane portion (62).

12. A lighting device (1) according to any one of the preceding claims, wherein, on the upper face (58), the membrane (52) has a plurality of pockets (76) lowered relative to said upper face (58), each pocket (76) being aligned with a respective optical body (72) and a respective LED (22).

13. A lighting device (1) according to claim 12, wherein each pocket (76) has a depth equal to the thickness of the membrane (52).

14. A lighting device (1) according to any one of the preceding claims, wherein each LED (22) is in contact with the upper face (58) of the membrane (52).

15. A lighting device (1) according to any one of the preceding claims, wherein the support (26) has on the upper face (28) a support seal seat (46) surrounding the hole region (33), lowered relative to the upper face (28), intended to accommodate a support seal (48).

## Patentansprüche

1. LED-Beleuchtungsvorrichtung (1) für die Bestrahlung einer kultivierten Fläche, das umfasst:
- einen Träger (26) aus wärmeleitendem Material mit einer Unterseite (30), die dazu bestimmt ist, der kultivierten Fläche zugewandt zu sein und einer gegenüberliegenden Oberseite (28), die mit einer Vielzahl von Löchern (32) versehen ist, die von der Oberseite (28) zur Unterseite (30) verlaufen, wobei Einlassöffnungen (32a) der Löcher (32) auf der Oberseite (28) gemeinsam eine Lochregion (33) der Oberseite (28) einnehmen
- eine Vielzahl an optischen Körpern (72), die geeignet sind, einen Lichtemissionskegel zu konzentrieren oder zu verteilen, wobei jeder optische Körper (72) in ein entsprechendes Loch (32) eingesetzt ist, um den aus der Unterseite (30) austretenden Emissionskegel zu konzentrieren oder zu zerstreuen;
- eine dünne und flexible Membran (52), die mit der Oberseite (28) des Trägers (26) in Kontakt ist
- ein LED-Bord (14), das eine Vielzahl von LEDs (22) umfasst, die auf der Membran (52) aufliegen und mit ihr in Kontakt stehen, die so konfiguriert ist, dass jede LED (22) in Richtung der Membran (52) gerichtet ist und mit dem jeweiligen optischen Körper (72) fluchtet, **dadurch gekennzeichnet, dass** die Membran (52) den Lochbereich (33) der Oberseite (28) des Trägers (26) bedeckt.

2. Beleuchtungsvorrichtung (1) nach Anspruch 1, wobei die Membran (52) eine Dicke von weniger als 1,5 Millimeter, bevorzugt weniger als 1 Millimeter, noch stärker bevorzugt gleich oder weniger als 0,6 Millimeter aufweist.

3. Beleuchtungsvorrichtung (1) nach einem der vorhergehenden Ansprüche, wobei jeder optische Körper (72) ein fester Körper hergestellt aus einem elastomeren Material, z.B. Silikonkautschuk, ist.

4. Beleuchtungsvorrichtung (1) nach einem der vorhergehenden Ansprüche, wobei jeder optische Körper (72) eine kuppelförmige Außenfläche (74) für den Austritt des Bestrahlungskegels aufweist.

5. Beleuchtungsvorrichtung (1) nach einem der vorhergehenden Ansprüche, wobei die Membran (52) und der optische Körper (72) in einem Stück hergestellt werden, wobei die optischen Körper (72) von einer Unterseite (56) der Membran (52) herausragen, und eine Oberseite (58) der Membran (52) den LEDs (22) zugewandt ist.

6. Beleuchtungsvorrichtung (1) nach einem der vorhergehenden Ansprüche, die eine Vielzahl an Lochdichtungen (78) umfasst, wobei jede Lochdichtung (78) mit einem entsprechenden optischen Körper (72) verbunden ist, wobei die Lochdichtung (78) geeignet ist, eine Dichtung zwischen der unteren Fläche (30) und der oberen Fläche (28) des Trägers (26) zu bilden.

7. Beleuchtungsvorrichtung (1) nach Anspruch 6, wobei jedes Loch (32) an der Einlassöffnung (32a) einen Lochdichtungssitz (38) aufweist, worin eine entsprechende Lochdichtung (78) untergebracht ist.

8. Beleuchtungsvorrichtung (1) nach Anspruch 6 oder 7, wenn abhängig von Anspruch 5, wobei die Lochdichtungen (78) aus einem Stück mit der Membran (52) und den optischen Körpern (72) hergestellt sind.

9. Beleuchtungsvorrichtung (1) nach einem der vorhergehenden Ansprüche, wobei die Membran (52) mechanisch von dem Träger (26) und/oder von dem LED-Bord (14) gelöst ist.

10. Beleuchtungsvorrichtung (1) nach einem der vorhergehenden Ansprüche, wobei die Membran (52) aus einer Vielzahl von strukturell getrennten Membranabschnitten (62), die, nebeneinanderliegend, die Membran (52) bilden, besteht.

11. Beleuchtungsvorrichtung (1) nach Anspruch 10, wobei jeder Membranabschnitt (62) mit einer vorgegebenen Anzahl an optischen Körpern (72) assoziiert ist und die optischen Körper (72) aus einem Stück mit dem Membranabschnitt (62) hergestellt sind.

12. Beleuchtungsvorrichtung (1) nach einem der vorhergehenden Ansprüche, wobei, auf der Oberseite (58), die Membran (52) eine Vielzahl von Taschen (76) aufweist, die relativ zu der Oberseite (58) abgesenkt sind, wobei jede Tasche (76) mit einem entsprechenden optischen Körper (72) und einer entsprechenden LED (22) fluchtet.

13. Beleuchtungsvorrichtung (1) nach Anspruch 12, wobei jede Tasche (76) eine Tiefe gleich der Dicke der Membran (52) aufweist.

14. Beleuchtungsvorrichtung (1) nach einem der vorhergehenden Ansprüche, wobei jede LED (22) in Kontakt mit der Oberseite (58) der Membran (52) steht.

15. Beleuchtungsvorrichtung (1) nach einem der vorhergehenden Ansprüche, wobei der Träger (26) auf der Oberseite (28) einen Stützdichtungssitz (46) aufweist, der den Lochbereich (33), der gegenüber der Oberseite (28) abgesenkt ist, dazu bestimmt, eine Stützdichtung (48) aufzunehmen, umgibt.

## Revendications

1. Dispositif d'éclairage (1) à diodes électroluminescentes, DEL, pour l'irradiation d'une surface cultivée comprenant :
- un support (26) constitué de matériau thermiquement conducteur, ayant une face inférieure (30), destinée à être tournée vers la surface cultivée, et une face supérieure (28) opposée, munie d'une pluralité de trous (32) passant de la face supérieure (28) à la face inférieure (30), dans lequel des ouvertures d'entrée (32a) desdits trous (32) sur la face supérieure (28) occupent collectivement une région de trou (33) de ladite face supérieure (28) ;
- une pluralité de corps optiques (72) appropriés pour concentrer ou répartir un cône d'émission de lumière, chaque corps optique (72) étant inséré dans un trou respectif (32) de façon à concentrer ou répartir le cône d'émission sortant de la face inférieure (30) ;
- une membrane mince et souple (52), en contact avec la face supérieure (28) du support (26),
- une plaque à DEL (14) comprenant une pluralité de DEL (22), superposée sur et en contact avec la membrane (52), configurée de sorte que chaque DEL (22) soit tournée vers la membrane (52) et s'aligne avec le corps optique (72) respectif,
**caractérisé en ce que** la membrane (52) recouvre ladite région de trou (33) de ladite face supérieure (28) dudit support (26).

2. Dispositif d'éclairage (1) selon la revendication 1, dans lequel la membrane (52) possède une épaisseur inférieure à 1,5 millimètre, de préférence inférieure à 1 millimètre, encore plus préférentiellement égale ou inférieure à 0,6 millimètre.

3. Dispositif d'éclairage (1) selon l'une quelconque des revendications précédentes, dans lequel chaque corps optique (72) est un corps solide constitué d'un matériau élastomère, par exemple de caoutchouc de silicone.

4. Dispositif d'éclairage (1) selon l'une quelconque des revendications précédentes, dans lequel chaque corps optique (72) possède une surface externe (74) sous la forme d'un dôme pour la fuite du cône d'irradiation.

5. Dispositif d'éclairage (1) selon l'une quelconque des revendications précédentes, dans lequel la membrane (52) et le corps optique (72) sont formés d'un seul tenant, dans lequel les corps optiques (72) font saillie à partir d'une face inférieure (56) de la membrane (52), et une face supérieure (58) de la membrane (52) est tournée vers les DEL (22).

6. Dispositif d'éclairage (1) selon l'une quelconque des revendications précédentes, comprenant une pluralité de joints d'étanchéité de trou (78), chaque joint d'étanchéité de trou (78) étant associé à un corps optique (72) respectif, ledit joint d'étanchéité de trou (78) étant approprié pour former un joint d'étanchéité entre la face inférieure (30) et la face supérieure (28) du support (26).

7. Dispositif d'éclairage (1) selon la revendication 6, dans lequel chaque trou (32) au niveau de l'ouverture d'entrée (32a) possède un siège de joint d'étanchéité de trou (38), dans lequel un joint d'étanchéité de trou (78) respectif est logé.

8. Dispositif d'éclairage (1) selon la revendication 6 ou 7 lorsque prise en dépendance de la revendication 5, dans lequel les joints d'étanchéité de trou (78) sont formés d'un seul tenant avec la membrane (52) et les corps optiques (72).

9. Dispositif d'éclairage (1) selon l'une quelconque des revendications précédentes, dans lequel la membrane (52) est mécaniquement détachée du support (26) et/ou de la plaque à DEL (14).

10. Dispositif d'éclairage (1) selon l'une quelconque des revendications précédentes, dans lequel la membrane (52) consiste en une pluralité de parties de membrane (62) structurellement séparées, qui, côte-à-côte, forment ladite membrane (52).

11. Dispositif d'éclairage (1) selon la revendication 10, dans lequel chaque partie de membrane (62) est associée à un nombre prédéfini de corps optiques (72) et lesdits corps optiques (72) sont formés d'un seul tenant avec ladite partie de membrane (62).

12. Dispositif d'éclairage (1) selon l'une quelconque des revendications précédentes, dans lequel, sur la face supérieure (58), la membrane (52) possède une pluralité de poches (76) abaissées par rapport à ladite face supérieure (58), chaque poche (76) étant alignée avec un corps optique (72) respectif et une DEL (22) respective.

13. Dispositif d'éclairage (1) selon la revendication 12, dans lequel chaque poche (76) possède une profondeur égale à l'épaisseur de la membrane (52).

14. Dispositif d'éclairage (1) selon l'une quelconque des revendications précédentes, dans lequel chaque DEL (22) est en contact avec la face supérieure (58) de la membrane (52).

15. Dispositif d'éclairage (1) selon l'une quelconque des revendications précédentes, dans lequel le support (26) possède, sur la face supérieure (28), un siège de joint d'étanchéité de support (46) encerclant la région de trou (33), abaissé par rapport à la face supérieure (28), destiné à recevoir un joint d'étanchéité de support (48).
